# EUROPÄISCHE PATENTSCHRIFT

(11) **EP 1 467 887 B1**
(45) Veröffentlichungstag und Bekanntmachung des Hinweises auf die Patenterteilung: **31.01.2007**
(21) Anmeldenummer: 02799051.4
(22) Anmeldetag: 03.12.2002
(51) Int. Cl.: B60K 15/035

(54) **KRAFTFAHRZEUG MIT EINEM KRYOTANK**
MOTOR VEHICLE COMPRISING A CRYOTANK
VEHICULE COMPORTANT UN RESERVOIR CRYOGENIQUE

(30) Priorität: 22.01.2002 DE 10202171
(43) Veröffentlichungstag der Anmeldung: 20.10.2004
(73) Patentinhaber: Bayerische Motoren Werke Aktiengesellschaft, 80809 München (DE)
(72) Erfinder: LECHNER, Werner, 84416 Taufkirchen (DE)
(86) Internationale Anmeldenummer: PCT/EP2002/013652
(87) Internationale Veröffentlichungsnummer: WO 2003/062005

(56) Entgegenhaltungen:
- EP-A- 0 537 968
- EP-A- 0 745 499
- EP-A- 1 057 998
- DE-A- 4 103 668
- DE-A- 19 533 863
- DE-A- 19 944 388
- GB-A- 2 303 668
- PATENT ABSTRACTS OF JAPAN vol. 016, no. 030 (M-1203), 24. Januar 1992 (1992-01-24) & JP 03 242415 A (TOYOTA MOTOR CORP), 29. Oktober 1991 (1991-10-29)
- PATENT ABSTRACTS OF JAPAN vol. 014, no. 285 (M-0987), 20. Juni 1990 (1990-06-20) & JP 02 086915 A (TOYOTA AUTOM LOOM WORKS LTD;OTHERS: 01), 27. März 1990 (1990-03-27)

## Beschreibung

Die Erfindung betrifft ein Kraftfahrzeug mit einem Kryotank zur Versorgung einer das Kraftfahrzeug antreibenden Brennkraftmaschine, der eine Abgasanlage mit einem Abgas-Katalysator zugeordnet ist, sowie mit einer Vorrichtung zur Verbrennung von boil-off-Gas aus dem Kryo-Tank. Zum technischen Umfeld wird neben der EP 0 745 499 B1 auf die gattungsgemäße DE 195 33 863 A1 verwiesen.

In der Zukunft äußerst interessante Kraftstoffe zum Antrieb von Kraftfahrzeugen, wie bspw. Wasserstoff oder Erdgas oder dgl. können auf relativ günstige Weise praktisch nur verflüssigt und somit stark abgekühlt gespeichert werden. Bei dieser kryogenen Kraftstoffspeicherung verdampft jedoch durch Wärmeeintrag in den Kraftstoff-Tank praktisch kontinuierlich eine geringe Menge von flüssigem Kraftstoff, wobei sich das sog. boil-off-Gas bildet. Insbesondere wenn kein Verbraucher für den Kraftstoff in Betrieb ist, d.h. insbesondere dann, wenn die Brennkraftmaschine außer Betrieb ist, steigt als Folge hiervon der Tank-Innendruck an. Aus Sicherheitsgründen muss dieser Druck durch Öffnen von Ventilen begrenzt werden. Im allgemeinen wird dabei das boil-off-Gas über Abblaseleitungen, in denen die besagten Ventile vorgesehen sind, in die Umgebung abgegeben. Aus der eingangs genannten EP 0 745 499 B1 ist daneben ein Verfahren mit Zwischenspeicherung der boil-off-Gase und katalytischer Oxidation für flüssiges Erdgas als kryogener Kraftstoff bekannt. Ferner ist in der DE 195 33 863 A1 beschrieben, dass sog. überschüssiges Gas, das bei Übersteigen eines Grenzdruckes in einem Kraftstoffbehälter bspw. für LPG oder LNG abgeblasen werden muss, in einer in den Abgasstrang eines Kraftfahrzeugs eingesetzten Katalysator-Heizvorrichtung verbrannt werden kann.

Grundsätzlich ist die Verbrennung des boil-off-Gases, wozu auch dessen katalytische Oxidation zählt, günstiger als das einfache Abblasen des (brennbaren) boil-off-Gases in die Umgebung. Werden die boil-off-Gase verbrannt, bspw. in einem Katalysator oder in einer sonstigen geeigneten Vorrichtung, so erhöht dies nicht nur die Betriebssicherheit des Fahrzeugs, sondern es kann auch dessen Energiebilanz zumindest geringfügig verbessert werden, wenn es gelingt, die insbesondere beim Verbrennen bzw. Oxidieren des boil-off-Gases freigesetzte Energie bzw. Wärmemenge zumindest teilweise zu nutzen.

In diesem Sinne eine günstige Maßnahme aufzuzeigen, ist Aufgabe der vorliegenden Erfindung.
Die Lösung dieser Aufgabe besteht in den Merkmalen der unabhängigen Ansprüche 1 oder 2.

Es wird somit zumindest ein Teil der bei der Verbrennung oder allgemein bei der Oxidation des boil-off-Gases freiwerdenden Wärme der Abgasanlage der Brennkraftmaschine zugeführt, wobei insbesondere ein in dieser Abgasanlage vorgesehener Abgaskatalysator, d.h. ein Konverter für schädliche Abgasbestandteile, von dieser Energiezufuhr profitieren kann. Bekanntermaßen muss ein solcher Abgaskatalysator eine gewisse Mindesttemperatur aufweisen, ehe er den relativ großen Abgasstrom der Brennkraftmaschine erfolgreich behandeln, d.h. die darin enthaltenen wesentlichen Schadstoffe konvertieren kann.

Wenn nun ein Abgaskatalysator der Fahrzeug-Brennkraftmaschine während einer Stillstandsphase des Kraftfahrzeugs durch eine Oxidation von boil-off-Gas bzw. durch die im oxidierten boil-off-Gas enthaltene Wärmemenge sporadisch immer wieder aufgewärmt wird, so besteht zumindest die Möglichkeit, dass zeitlich nicht lange vor einem Start der Brennkraftmaschine der Abgaskatalysator bereits erwärmt wurde und somit betriebsbereit ist. Dabei sei darauf hingewiesen, dass die erwünschte gelegentliche Erwärmung des Brennkraftmaschinen-Abgaskatalysators durch den verbrannten bzw. allgemein oxidierten boil-off-Gasstrom auf unterschiedliche Arten erfolgen kann. So kann das boil-off-Gas in einer eigenständigen Verbrennungs-Vorrichtung verbrannt werden und der aus dieser Vorrichtung austretende warme bzw. heiße Gasstrom in die Brennkraftmaschinen-Abgasanlage nahe des Brennkraftmaschinen-Abgaskatalysators eingeleitet werden, so dass zumindest ein Teil der im Gasstrom enthaltenen Wärmemenge an den Abgaskatalysator abgegeben wird. Dies kann einerseits durch Strahlung bzw. Wärmeleitung, andererseits aber auch durch Konvektion erfolgen, und zwar insbesondere bzw. besonders effizient dann, wenn der Gasstrom durch den Abgaskatalysator selbst hindurch geführt wird. Dabei kann die besagte Verbrennungs-Vorrichtung für die boil-off-Gase ihrerseits auf katalytischer Basis arbeiten, d.h. ebenfalls in Form eines Katalysators ausgebildet sein, alternativ aber auch mit homogener Flamme arbeiten.

Alternativ kann aber auch der Brennkraftmaschinen-Abgaskatalysator selbst die Verbrennungs-Vorrichtung für das boil-off-Gas bilden, d.h. das boil-off-Gas wird im Abgaskatalysator der Brennkraftmaschine katalytisch verbrannt bzw. oxidiert. Dabei erwärmt sich dieser wie erwünscht, wobei ein weiterer wesentlicher Vorteil darin zu sehen ist, dass keine eigenständige Katalysator-Vorrichtung für die Verbrennung des boil-off-Gases benötigt wird. Um dabei eine erfolgreiche Konvertierung bzw. flammlose Verbrennung zu erzielen, kann das boil-off-Gas ggf. nur durch einen Teilbereich des Abgas-Katalysators hindurch geleitet werden, um diesen Teilbereich schneller auf die erforderliche Betriebstemperatur zu bringen. Dabei kann es sich um einen Katalysator-Teilbereich in Strömungsrichtung des Brennkraftmaschinen-Abgases betrachtet oder um einen Teilbereich quer hierzu betrachtet handeln, d.h. dass das boil-off-Gas lediglich einen Teil-Querschnitt des Abgaskatalysators beaufschlagt.

Wenn das boil-off-Gas in einer eigenständigen Verbrennungs-Vorrichtung verbrannt wird, so kann die darin anfallende Abwärme nicht nur über den aus dieser Verbrennungs-Vorrichtung abgeführten Gasstrom, sondern zusätzlich durch Wärmeleitung der Brennkraftmaschinen-Abgasanlage und insbesondere dem darin vorgesehenen Abgaskatalysator zugeführt werden. Im einfachsten Fall ist hierzu die sog. Verbrennungs-Vorrichtung geeignet wärmeleitend mit dem Brennkraftmaschinen-Abgaskatalysator verbunden.

Es wird vorgeschlagen, dass das boil-off-Gas durch eine Düse saugstrahlpumpenartig in eine Gasleitung eingeleitet wird, die dann über die Saugstrahlpumpen-Wirkung Umgebungsluft und/oder Spülluft aus der Kraftstoff-Versorgungsanlage des Kraftfahrzeugs bezieht. Diese Gasleitung kann dann direkt in der Abgasanlage der Brennkraftmaschine münden oder zuvor in einer sog. Verbrennungs-Vorrichtung für das boil-off-Gas münden. Dabei ermöglicht es die saugstrahlpumpenartige Gestaltung, dass neben dem boil-off-Gasstrom ausreichend Luft bzw. Sauerstoff zur Oxidation bzw. Verbrennung des boil-off-Gases vorliegt, und zwar entweder in der separaten sog. Verbrennungs-Vorrichtung oder im Brennkraftmaschinen-Abgaskatalysator

Besonders vorteilhaft ist es, wenn mittels der sog. Saugstrahlpumpen-Wirkung sog. Spülluft aus der Kraftstoff-Versorgungsanlage des Kraftfahrzeugs abgezogen bzw. gefördert wird. Ein derartige Spülluftsystem ist an einer Kryotank-Anlage eines Kfz's vorzusehen, um zu verhindern, dass sich geringe Leckmengen von gasförmigem Kraftstoff in irgendwelchen Isolationshüllen oder dgl. ansammeln und dort ein zündfähiges Gemisch bilden können. Mit geeignet geführter Spülluft, die nun mittels des Saugstrahlprinzips von dem geeignet aus einer Düse in die genannte Gasleitung eintretenden boil-off-Gas gefördert wird, gelangen diese geringen Leckmengen zusammen mit dem boil-off-Gas in die genannte Verbrennungs-Vorrichtung und können dann in dieser verbrannt bzw. aufoxidiert werden.

Vorteilhafterweise ist somit für den Spülluftstrom keine eigenständige Fördervorrichtung vonnöten. Dieser Vorteil tritt insbesondere auch dann zutage, wenn die besagte Gasleitung derart in die Abgasanlage der Brennkraftmaschine mündet, dass während des Betriebs der Brennkraftmaschine Gase aus der Gasleitung in die Abgasanlage abgesaugt werden, und zwar vom Abgasstrom der Brennkraftmaschine. Somit kann auch bei Betrieb der Brennkraftmaschine, während dem üblicherweise kein boil-off-Gas anfällt, ein Spülluftstrom gefördert werden. Auch dann ist also sichergestellt, dass anfallende Leckagen an der Kraftstoffversorgungsanlage abgesaugt und geeignet behandelt, nämlich in der genannten Verbrennungs-Vorrichtung und/oder im Abgaskatalysator verbrannt werden. Eine Entsorgung möglicher Leckagen in der Kraftstoff-Versorgungsanlage bzw. im Kryotanksystem ist somit sowohl bei Stillstand der Brennkraftmaschine als auch bei deren Betrieb gewährleistet.

In den beigefügten Prinzipskizzen sind bevorzugte Ausführungsbeispiele der Erfindung lediglich prinzipiell dargestellt, wobei die **Figuren 1, 2** eine erste und zweite Ausführungsform mit einer eigenständigen Verbrennungs-Vorrichtung bzw. allgemein einem sog. Verwerter für das boil-off-Gas einer Kryotank-Anlage eines Kraftfahrzeugs zeigen, während bei den Ausführungsbeispielen nach den Figuren **3, 4** das boil-off-Gas im Abgaskatalysator der Bennkraftmaschine konvertiert bzw. aufoxidiert (und somit "verbrannt") wird. Dabei sind in sämtlichen Figuren gleiche Elemente mit den gleichen Bezugsziffern bezeichnet.

Figürlich nicht dargestellt ist ein Kryotank eines Kraftfahrzeugs zur Speicherung von Kraftstoff für eine ebenfalls nicht dargestellte, das Kfz antreibende Brennkraftmaschine. Auch nicht gezeigt ist das nähere Umfeld des (im wesentlichen üblichen) Kryotanksystems, dargestellt ist jedoch eine mit der Bezugsziffer 1 versehene Düse, aus welcher (von geeigneten nicht gezeigten Ventilen gesteuert) das sog. grundsätzlich bekannte boil-off-Gas des Kryotank-Systems austreten kann, und zwar in eine Gasleitung 2.

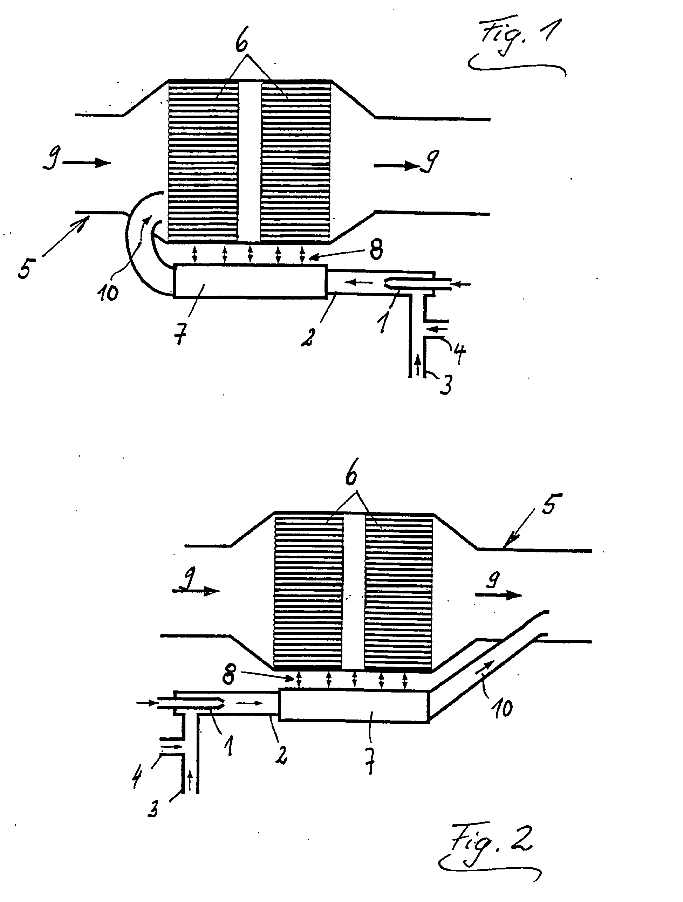

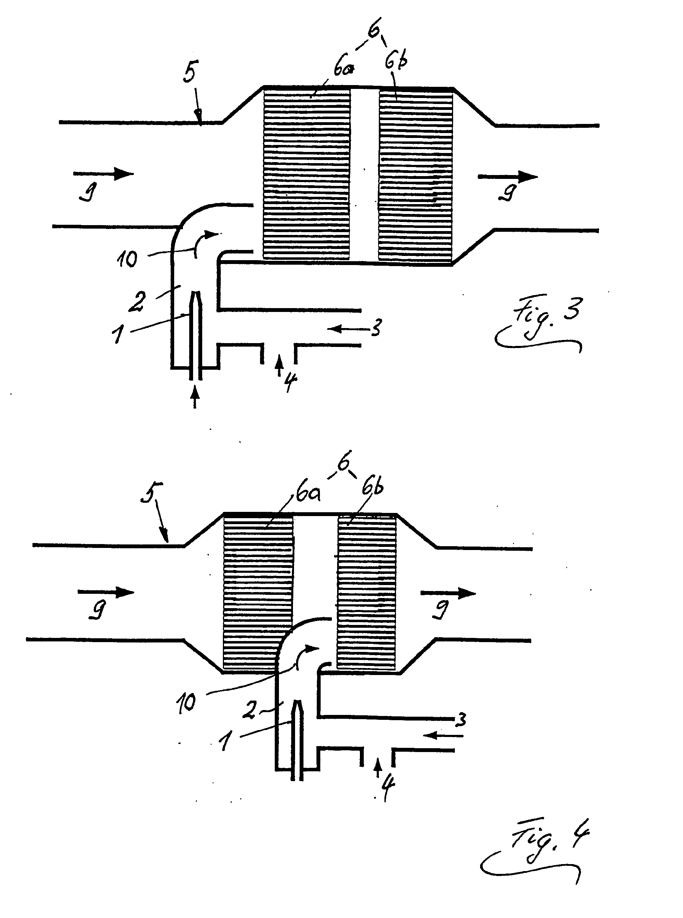

Bezüglich der Gasleitung 2 ist die Düse 1 dabei - wie prinzipiell dargestellt - solchermaßen angeordnet, dass eine Saugstrahlpumpe gebildet wird, durch welche aus Zweigleitungen 3, 4 der Gasleitung 2 auch Umgebungsluft und sog. Spülluft des Kryotanksystems in die Gasleitung 2 angesaugt werden kann (vgl. hierzu die ausführliche Erläuterung weiter oben). Letztlich mündet die Gasleitung 2 in der Abgasanlage 5 der Kfz-Brennkraftmaschine, und zwar bei den Ausführungsbeispielen nach den **Figuren 1 und 3** stromauf (in Strömungsrichtung der Brennkraftmaschinen-Abgase 9 betrachtet) eines wie üblich darin vorgesehenen Abgaskatalysators 6, der dazu dient, schädliche Bestandteile des Brennkraftmaschinen-Abgasstromes 9 zu konvertieren.

Während bei den Ausführungsbeispielen nach den **Figuren 1 und 2** in der Gasleitung 2 zwischen der saugstrahlpumpenartigen Einmündung der Düse 1 und der Einmündungsstelle in die Abgasanlage 5 eine Verbrennungs-Vorrichtung 7 für das boil-off-Gas (sowie für den in der genannten Spülluft befindlichen gasförmigen Kraftstoff) vorgesehen ist, zeigen die **Figuren 3 und 4** keine derartige Verbrennungs-Vorrichtung. Bei diesen beiden letzgenannten Ausführungsbeispielen wird somit das boil-off-Gas im Abgaskatalysator 6 selbst verbrannt bzw. aufoxidiert, wobei gemäß **Figur 3** der gesamte mit einem geeigneten Katalyten beschichtete Trägerkörper des Abgaskatalysators 6 vom boil-off-Gas durchströmt wird, während bei der Variante nach **Figur 4** das boil-off-Gas lediglich dem zweiten in Strömungsrichtung des Abgasstromes 9 betrachtet hinteren katalytisch beschichteten Trägerkörper 6b zugeführt wird, während der stromauf dessen liegende vordere Trägerkörper für einen Katalyten 6a nicht mit boil-off-Gas beaufschlagt wird. Die im hinteren Trägerkörper 6b freiwerdende Wärme kann somit diesen intensivst erwärmen, ohne dass Wärme an den vorderen Trägerkörper 6a abgegeben wird.

Be den Ausführungsbeispielen nach den **Figuren 1, 2** mit einer Verbrennungs-Vorrichtung 7 für die boil-off-Gase wird der Abgaskatalysator 6 im wesentlichen durch die im aus der Verbrennungs-Vorrichtung 7 austretenden Gasstrom (Pfeil 10) enthaltene Wärmemenge erwärmt, wobei gemäß **Figur 1** dieser Gasstrom durch den Abgaskatalysator 6 bzw. durch dessen katalytisch beschichtete Trägerkörper 6a, 6b hindurchgeführt wird, während bei der Variante nach **Figur 2** im wesentlichen nur die Strahlungswärme dieses Gasstromes 10 bzw. die an die Wand der Abgasanlage 5 abgegebene Wärme dem Abgaskatalysator 6 zugute kommt, nachdem in dieser Variante der Gasstrom 10 aus der Verbrennungs-Vorrichtung 7 stromab des Abgaskatalysators 6 (in Richtung des Brennkraftmaschinen-Abgasstromes 9 betrachtet) in die Abgasanlage 5 eingeleitet wird.

Bei beiden Varianten mit der Verbrennungs-Vorrichtung 7 steht diese zusätzlich mit dem Abgaskatalysator 6 in wärmeleitender Verbindung, was durch Doppelpfeile 8 dargestellt ist. Somit kann der Abgaskatalysator 6 die Verbrennungs-Vorrichtung 7 vorwärmen und somit - falls diese auf katalytischer Basis arbeitet - deren Betriebsbereitschaft sicherstellen. Dies ist insbesondere bei bivalenten, d.h. mit unterschiedlichen Kraftstoffen betreibbaren Kraftfahrzeugen von Bedeutung, wenn während des Betriebs mit Benzin oder dgl. boil-off-Gase aus dem Kryotank anfallen. Im übrigen kann bei der Variante nach **Figur 1** ggf. in der Verbrennungs-Vorrichtung 7 nicht oxidiertes boil-off-Gas im nachgeschalteten Abgaskatalysator 6 verbrannt werden.

Bei Ausführungsbeispielen nach den **Figuren 1, 3 und 4** führt die bei der Verbrennung des boil-off-Gases freiwerdende Reaktionswärme zu einer Vorheizung des Abgaskatalysators 6, wodurch letzterer im Falle eines Kaltstarts der Brennkraftmaschine schneller seine Betriebstemperatur erreichen kann, so dass die SchadstoffEmissionen der Brennkraftmaschine gesenkt werden. Aber auch bei der Variante nach Figur 2 wird der Abgaskatalysator 6 durch die Verbrennung des boil-off-Gases erwärmt. Dabei ist das beschriebene System in der Lage, praktisch unvermeidliche geringfügige Leckagen im Kryotanksystem sowohl bei Stillstand der Brennkraftmaschine als auch während deren Betrieb nur durch das Saugstrahlprinzip abzuziehen und wie beschrieben zu entsorgen. Hierfür ist somit keine eigenständige Energieversorgung (bspw. in Form eines separater Lüfters) erforderlich. Im übrigen wird durch die Angliederung des sog. boil-off-Verwerters bzw. der Verbrennungs-Vorrichtung 7 für das boil-off-Gas eines Kfz-Kryotanksystems an die Abgasanlage 5 der das Kfz antreibenden Brennkraftmaschine kein zusätzliches Abgasrohr für die Verbrennungs-Vorrichtung 7 (bzw. für den boil-off-Verwerter) benötigt, wobei noch darauf hingewiesen sei, dass durchaus eine Vielzahl von Details abweichend von obigen Erläuterungen gestaltet sein kann, ohne den Inhalt der Patentansprüche zu verlassen.

## Patentansprüche

1. Kraftfahrzeug mit einem Kryotank zur Versorgung einer das Kraftfahrzeug antreibenden Brennkraftmaschine, der eine Abgasanlage (5) mit einem Abgas-Katalysator (6) zugeordnet ist, sowie mit einer Vorrichtung (7) zur Verbrennung von boil-off-Gas aus dem Kryo-Tank und mit Mitteln zur Zuführung zumindest eines Teils der bei der Verbrennung des boil-off-Gases freiwerdenden Wärme an den Abgas-Katalysator,
**dadurch gekennzeichnet, dass** eine Düse (1) vorgesehen ist, durch die das boil-off-Gas saugstrahlpumpenartig in eine Gasleitung (2) eingeleitet wird, wobei über die Saugstrahlpumpen-Wirkung Umgebungsluft und/oder Spülluft aus der Kraftstoff-Versorgungsanlage des Kraftfahrzeugs bezogen wird, und wobei die Gasleitung (2) nahe des Abgas-Katalysators (6) in die Brennkraftmaschinen-Abgasanlage (5) mündet.

2. Kraftfahrzeug mit einem Kryotank zur Versorgung einer das Kraftfahrzeug antreibenden Brennkraftmaschine, der eine Abgasanlage (5) mit einem Abgas-Katalysator (6) zugeordnet ist, **dadurch gekennzeichnet, dass** das boil-off-Gas im unverbrannten Zustand über eine Gasleitung (2) in die Abgasanlage (5) stromauf des Abgas-Katalysators (6) oder in denselben eingeleitet wird, und
dass eine Düse (1) vorgesehen ist, durch die das boil-off-Gas saugstrahlpumpenartig in die Gasleitung (2) eingeleitet wird, wobei über die Saugstrahlpumpen-Wirkung Umgebungsluft und/oder Spülluft aus der Kraftstoff-Versorgungsanlage des Kraftfahrzeugs bezogen wird.

3. Kraftfahrzeug nach Anspruch 1 oder 2,
**dadurch gekennzeichnet, dass** die Gasleitung (2) derart in die Abgasanlage (5) der Brennkraftmaschine mündet, dass während des Betriebs der Brennkraftmaschine Gase aus der Gasleitung (2) in die Abgasanlage (5) abgesaugt werden.

## Claims

1. A motor vehicle comprising a cryotank for supplying an internal-combustion engine driving the motor vehicle, with which engine an exhaust gas system (5) with an exhaust gas catalytic converter (6) is associated, also comprising a device (7), for the combustion of boil-off gas from the cryotank and comprising means for supplying at least a part of the heat released during combustion of the boil-off gas to the exhaust gas catalytic converter, **characterised in that** a nozzle (1) is provided through which the boil-off gas is introduced in the manner of a suction jet pump into a gas line (2), ambient air and/or scavenging air being obtained via the suction jet pump action from the fuel supply system of the motor vehicle, and the gas line (2) opening into the internal-combustion engine exhaust gas system (5) close to the exhaust gas catalytic converter (6).

2. A motor vehicle comprising a cryotank for supplying an internal-combustion engine driving the motor vehicle, with which an exhaust gas system (5) with an exhaust gas catalytic converter (6) is associated, **characterised in that** the boil-off gas is introduced in the non-combusted state via a gas line (2) into the exhaust gas system (5) upstream from the exhaust gas catalytic converter (6) or into it, and **in that** a nozzle (1) is provided through which the boil-gas is introduced into the gas line (2) in the manner of a suction jet pump, ambient air and/or scavenging air being obtained from the fuel supply system of the motor vehicle via the suction jet pump action.

3. A motor vehicle according to claim 1 or 2, **characterised in that** the gas line (2) opens into the exhaust gas system (5) of the internal-combustion engine in such a way that during operation of the internal-combustion engine, gases are sucked from the gas line (2) into the exhaust gas system (5).

## Revendications

1. Véhicule automobile comportant un réservoir cryogénique pour l'alimentation d'un moteur à combustion interne auquel est associé un système d'échappement (5) pourvu d'un catalyseur de gaz d'échappement (6), et un dispositif (7) de combustion des gaz « boil-off » du réservoir cryogénique, ainsi que des moyens pour amener au moins une partie de la chaleur dégagée lors de la combustion des gaz « boil-off » au catalyseur de gaz d'échappement,
**caractérisé en ce qu'**
une buse (1) introduit les gaz « boil-off » sous forme de jet aspirant dans une conduite de gaz (2), l'effet de jet aspirant retirant de l'air ambiant et/ou de l'air de rinçage du système d'alimentation en carburant, et la conduite de gaz (2) débouche près du catalyseur de gaz d'échappement (6) dans le système d'échappement (5) du moteur à combustion interne.

2. Véhicule automobile comportant un réservoir cryogénique pour l'alimentation d'un moteur à combustion interne auquel est associé un système de gaz d'échappement (5) pourvu d'un catalyseur de gaz d'échappement (6),
**caractérisé en ce qu'**
à l'état non brûlé les gaz « boil-off » sont introduits par une conduite de gaz (2) dans le système d'échappement (5) en amont du catalyseur de gaz d'échappement (6) ou dans celui-ci, et une buse (1) introduit les gaz « boil-off » sous forme de jet aspirant dans la conduite de gaz (2), de l'air ambiant et/ou de l'air de rinçage du système d'alimentation en carburant du véhicule automobile étant amené par l'effet de jet aspirant.

3. Véhicule automobile selon la revendication 1 ou 2,
**caractérisé en ce que**
la conduite de gaz (2) débouche dans le système d'échappement (5) du moteur à combustion interne de sorte que pendant son fonctionnement des gaz sont aspirés de la conduite de gaz (2) dans le système d'échappement (5).
